# FASCICULE DE BREVET EUROPEEN

(11) **EP 2 443 806 B1**
(45) Date de publication et mention de la délivrance du brevet: **27.08.2014**
(21) Numéro de dépôt: 10730542.7
(22) Date de dépôt: 15.06.2010
(51) Int. Cl.: H04L 29/06, H04L 29/08, H04W 4/14, G06F 3/048

(54) **MODULE CLIENT USSD GENERIQUE INTELLIGENT EMBARQUE DANS UN TERMINAL DE TELECOMMUNICATIONS**
IN EIN TELEKOMMUNIKATIONSENDGERÄT EINGEBETTETES GENERISCHES INTELLIGENTES USSD-CLIENT-MODUL
GENERIC SMART USSD CLIENT MODULE EMBARKED IN A TELECOMMUNICATION TERMINAL

(30) Priorité: 17.06.2009 FR 0902933
(43) Date de publication de la demande: 25.04.2012
(73) Titulaire: Opencode Systems O.O.D., 1612 Sofia (BG)
(72) Inventeur: STAYKOFF, Constantin, 1612 Sofia (BG)
(86) Numéro de dépôt international: PCT/IB2010/052686
(87) Numéro de publication internationale: WO 2010/146541

(56) Documents cités:
- WO-A-2005/079084
- KR-K2- 100 628 769
- US-A1- 2009 011 745
- ANONYMOUS: "USSD Services for Interactive Mobile Users - Building User-Friendly Mobile Telephony Applications Using Dialogic TM Distributed Signaling Interface Components" INTERNET CITATION, [Online] 31 août 2008 (2008-08-31), pages 1-17, XP002528245 Extrait de l'Internet: URL:http://www.dialogic.com/products/docs/ appnotes/11038_USSD_an.pdf> [extrait le 2008-05-11]
- DATABASE WPI Week 200731 Thomson Scientific, London, GB; AN 2007-319858 XP002575155 -& KR 100 628 769 B1 (LG ELECTRONICS INC) 20 septembre 2006 (2006-09-20)
- DEC_XM: "USSD Menu Browser" , [Online] 1 août 2007 (2007-08-01), pages 1-3, XP002575162 Extrait de l'Internet: URL:http://www.rentacoder.com/RentACoder/m isc/BidRequests/ShowBidRequest.asp?lngBidR equestId=738186> [extrait le 2010-03-25]

## Description

La présente invention concerne un module client USSD générique et intelligent, embarqué dans un terminal de télécommunications.

La présente invention est située dans le domaine des applications conversationnelles client-serveur, plus particulièrement dans le domaine des dialogues dynamiques entre un terminal de télécommunications mobile et un réseau ou bien un serveur d'applications et de services, à l'aide d'interfaces interactives, offrant la possibilité au terminal d'accéder à un serveur ou à d'autres terminaux, de dialoguer, de naviguer, d'échanger des informations, de télécharger des applications et des données (texte, vidéo, audio, images et autres) et d'utiliser différentes applications et services.

La présente invention est située notamment dans le secteur de la téléphonie mobile, dans un contexte d'expansion de nouvelles fonctionnalités et de services interactifs, de convergence des moyens de dialogue entre dispositifs hétérogènes, tels que téléphones mobiles, équipements mobiles, plateforme numériques d'applications et de services, serveurs Internet, services et équipements de tierce parties et autres. De plus, se rajoute les exigences de haute ergonomie pour les utilisateurs de terminaux, ainsi que les exigences de services en temps réel, et cela en respectant les contraintes en ressources des infrastructures mobiles (serveurs, bandes passantes des réseaux, contraintes temps réel) et des terminaux mobiles (capacités de traitement, de stockage et d'affichage limités).

Le problème technique qui se pose est donc de définir des systèmes client - serveur génériques, basés sur des protocoles simples d'implémentation et d'utilisation, avec des fonctionnalités dynamiques, interactives, intuitives, faciles d'utilisation et aussi, permettant une intégration rapide, et peu consommatrices en termes de ressources. A ce problème se rajoutent les exigences de l'interopérabilité, de la personnalisation et du déploiement.

Le problème technique à résoudre est par conséquent de concevoir un système client - serveur d'applications et de services permettant avec les moindres coûts possibles, la mise en place d'applications et de services multiples et réutilisables, ciblant un nombre considérable d'utilisateurs. Le problème est également de répondre à l'exigence d'avoir des services compatibles interactifs entre les technologies existantes et émergentes, sans implémentations coûteuses, et de préférence, avec peu de modifications des équipements des opérateurs réseaux. Finalement, se rajoutent les fortes exigences de fournir ce type d'applications et de services, à l'aide de peu de modifications dans les terminaux des utilisateurs, tout en leur procurant une interface dynamique, interactive, ergonomique et répondant aux contraintes de temps réel.

Une forte demande est présente quant aux moyens d'accès à diverses informations et cela dans des délais courts. Aussi, cette demande est relative à la possibilité d'obtenir des informations avec un terminal mobile, à partir d'un réseau de télécommunications en mode local, en mode « Roaming » (« Roaming » en anglais, itinérance inter-réseaux) ou en mode nomade.

Les fortes contraintes des capacités des terminaux mobiles doivent par conséquent être prises en compte, ainsi que les performances des réseaux et les problèmes inhérents d'ergonomie.

De plus dans les systèmes client-serveur se pose le problème de la répartition de « l'intelligence », entre le réseau et le terminal, des diverses parties des services. Sous le terme « intelligence » est entendue la capacité de décider de la gestion et de l'exécution d'une action, d'un processus ou bien de traitement des données. Ladite intelligence est utilisée par exemple dans le but d'offrir des possibilités fonctionnelles supplémentaires, une flexibilité et une indépendance aux contraintes et/ou aux besoins des utilisateurs.

Afin de répondre à cette problématique, de nombreux documents de l'art antérieur traitent de clients embarqués sur des terminaux mobiles, soit compatibles avec les contraintes des réseaux et des terminaux mobiles, au détriment de l'ergonomie, soit fournissant une interface utilisateur fonctionnelle et conviviale, au détriment de la qualité de service (temps de réponse, nombre de services proposés).

Ces documents apportent des solutions techniques au modèle de type client-serveur, dans lequel un client se connecte par des moyens particuliers à un serveur afin d'accéder à des informations, de naviguer, de télécharger, d'enregistrer ou de transférer des applications et des données.

L'art antérieur connaît donc différentes approches, qui cependant n'abordent que des aspects restreints et ponctuels de cette problématique, sans résoudre le problème technique dans sa globalité, c'est-à-dire trouver un point optimal entre les contraintes des équipements (réseaux et terminaux), les aspects temps réel, l'ergonomie et le nombre de fonctionnalités et de services.

Des applications et des services concrets sont rendus possibles en se basant sur la navigation à l'aide de protocoles standards de type WEB (« Word Wide Web » ou « WEB » en anglais, toile réseau mondiale ou encore Internet), tels que les protocoles HTTP (« HyperText Transfer Protocol » en anglais, protocole de transfert de texte), XML (« XML » en anglais, eXtended Markup Language, langage de marquage étendu de description et d'analyse de données), IP (« Internet Protocol » en anglais, protocole Internet) ou autres, ceci en combinaison avec des protocoles de transports classiques TCP (« Transmission Control Protocol » en anglais, un des protocoles de base pour la transmission de donnée en IP), UDP («User Datagram Protocol» en anglais, protocole de transfert de données faisant partie du protocole TCP/IP) et autres, qui ne garantissent pas le temps de réponse des requêtes, défaillant ainsi à la contrainte de services en temps réel.

Une autre approche connue par l'art antérieur est de limiter la portée de l'accès à certain services et applications, en se basant sur des protocoles simplifiés tenant compte des capacités limitées des téléphones mobiles, comme par exemple le protocole WAP (« Wireless Application Protocol » en anglais, protocole d'application sans fil), spécialement conçu pour les téléphones mobiles. Cette approche est toutefois au détriment des aspects d'ergonomie et de multiservices, sans pour autant garantir le respect de services en temps réel.

Finalement, un effort important est concentré sur les applications clients embarquées dans les terminaux mobiles portables, qui répondent aux caractéristiques d'ergonomie et d'esthétique, mais qui malheureusement demandent une installation de logiciels dédiées sur le terminal, sont exigeantes en termes de ressources du terminal mobile, et aussi, ne garantissent pas des services en temps réel.

Un document bien connu par l'art antérieur est le document US7,103,018, qui concerne un terminal de communication initiant une session WAP (« Wireless Session Protocol » en anglais, protocole de session sans fil) en envoyant une requête à un serveur. La requête comprend une identification des données requises, ainsi qu'un numéro d'identification fourni par ledit serveur. Suite à ce numéro d'identification du terminal, c'est-à-dire de l'utilisateur, le serveur identifie le terminal par rapport aux données d'identification dans une base de données associée à cet utilisateur. Les informations sur le profil de l'utilisateur indiquent le format des données qui peuvent être gérées par le terminal. Lorsque le serveur répond à la requête, il envoie des données correspondant au format défini par le profil de l'utilisateur.

Cependant, ce documents est limité à un type de données prédéterminées par le profil de chaque utilisateur, par le format des données à envoyer et par les capacités des canaux de transport et n'offre pas la souplesse d'un navigateur de type WEB. Basés sur les technologies WAP, cette solution n'assure ni un temps de réponse garantie, ni une ergonomie élevée.

Une autre référence de l'art antérieur est le document WO03030026, relatif à la redirection d'un contenu à partir d'un serveur de contenus, par application d'une définition spéciale à ce contenu. Le contenu et les définitions qui l'accompagnent sont alors envoyés vers le dispositif sur le réseau cellulaire. Le navigateur disposé sur le dispositif est programmé pour reconnaître la définition et pour mettre un indicateur approprié sur le contenu, ledit indicateur définissant la façon dont le dispositif utilise le contenu, en particulier, en définissant que le contenu ne supprimera pas ce contenu de la mémoire même en vidant le cache pour libérer l'espace disque.

Néanmoins, ce documents propose une reconnaissance des données et des contenus en fonctions des possibilités du terminal mobile et se limite à un nombre très restreint de fonctionnalités, de services, d'usages et d'accès à des données.

Un document également connu par l'art antérieur est le document EP1874018, relatif à des spécifications de langage de balisage qui sont déterminées pour fournir des médias pseudo-riches pendant les appels téléphoniques, et pour mettre en oeuvre deux points finaux qui soutiennent ces spécifications. Chaque point final mis en oeuvre fonctionne comme mi-téléphone et mi-navigateur, où l'appel téléphonique consiste en partie en un flux audio duplex traditionnel entre les appelants, complétés par des médias pseudo-riches transmis de l'un à l'autre. Toutefois, les applications de données et de voix sont distinctes et les données sont transmises par des canaux séparés, c'est-à-dire qu'un découpage est appliqué, en des étapes pour demander un contenus par un canal donné et en des étapes pour recevoir des données par plusieurs autres canaux distincts.

Aussi, de nombreux documents de l'art antérieur traitent de clients de navigation embarqués dans des terminaux mobiles, possédant une interface utilisateur esthétique et ergonomique, permettant d'accéder à des pages Web standards, de les afficher et de naviguer. Cependant, cette haute ergonomie et diversité sont au détriment de la qualité de service en termes de canal garantit et de temps de réponse et sont d'une complexité élevée en termes de ressources d'implémentation.

Le document KR 100 628 769 B1 (LG ELECTRONICS INC) 20 septembre 2006 (2006-09-20) divulgue un terminal mobile ayant une fonction d'affichage d'une interface, graphique de menu USSD pour maximiser le confort de l'utilisateur en supprimant la nécessité de manipuler des touches pour sélectionner un menu de texte.

En résumé, l'art antérieur ne propose pas dans leur intégralités, des services complets tels que la navigation en temps réel, ni répond aux exigences susmentionnés des systèmes client-serveur de télécommunications mobiles.

La présente invention s'appuie sur des standards et des protocoles existants, dont l'USSD (« Unstructured Supplementary Service Data », en anglais, service de données supplémentaire et non structuré), ouverts et implémentés déjà de manière native sur des dispositifs, donc déjà disponibles entièrement ou en partie. Elle s'appuie sur des fonctionnalités natives des réseaux et des terminaux en proposant un système générique client-serveur, multi-applications et multiservices.

Sous la notion « client » dans la présente invention, est entendu une application ayant son propre navigateur embarqué ou bien utilisant un tierce navigateur embarqué, l'application elle-même étant embarquée dans le terminal connecté ou pas à un réseau de télécommunications. Ce réseau est par exemple de type GSM (« Global System for Mobile » en anglais, système global de télécommunications pour la téléphonie mobile), de type GPRS (« General Packet Services » en anglais, système de télécommunications par accès avec services par paquets), de type UMTS (« Universal Mobile Télécommunications System » en anglais, système de télécommunications mobiles universelles), de type 3G/3G+ et/ou tout autre réseau de type NGN (« Next Generation Network » en anglais, réseau de génération future).

La présente invention aborde l'insuffisance de l'art antérieur à l'aide d'un système client - serveur basé sur des protocoles réseaux standards de type USSD, dont le serveur d'applications et de services est situé dans un coeur de réseau de télécommunications, un réseau informatique ou autre réseau. Ce serveur d'applications et de services est par exemple basé sur un interpréteur de langage structuré par objets conversationnels, tel que par exemple XML, VXML («Voice eXtended Markup Language » en anglais, langage vocal de marquage étendu, qui désigne une interface de programmation d'applications relative à la communication utilisant des périphériques liés à la téléphonie), ou autre.

L'équipement de l'utilisateur, ledit terminal, est par exemple un téléphone mobile (dit encore téléphone portable), un PDAs, («Personal Digital Assistant » en anglais, ordinateur de poche, cumulant de nombreuses fonctions), un ordinateur multifonctions de bord ou de véhicule, une plateforme multifonctions domestique ou d'entreprise, comprenant par exemple une fonction de surveillance ou de sécurité, ou tout autre dispositif fixe ou mobile pouvant communiquer avec au moins un réseau numérique.

Dans la présente invention, sous le terme « utilisateur » est entendu une personne physique abonnée, fixe, nomade ou « Roamer » (« Roamer » en anglais, personne itinérante dans le sens de « Roaming » en anglais, itinérance inter-réseaux) à au moins un réseau, ou un opérateurs de télécommunications, ou une tierce partie, par exemple un fournisseur d'applications, de services, de contenus ou d'un équipement quelconque, par exemple d'un dispositif d'alarme ou de signalisation.

La présente invention a donc pour objet une application client embarquée dans un terminal de télécommunications mobile, apte à communiquer et à échanger des données avec un serveur et/ou un réseau, basé sur des protocoles de télécommunication temps réel, tel que USSD, ledit client répondant au exigences de temps réel, de peu de consommation en ressources, de multifonctions et d'intégration avec sa propre ergonomie ou bien avec une ergonomie tierce utilisée dans le terminal.

L'invention est définie dans la revendication de système 1 et la revendication de procédé 7.

Dans son acception la plus générale, la présente invention concerne un système client numérique, basé sur au moins un protocole USSD, dit client USSD, étant situé dans au moins un terminal mobile et comprenant des moyens pour :
- recevoir et interpréter au moins une donnée et/ou au moins une instruction en provenance d'au moins un réseau de télécommunications;
- afficher sous forme textuelle et/ou graphique sur un écran et présenter sur ledit terminal mobile au moins une donnée et/ou au moins une instruction en provenance dudit réseau;
- interpréter et renvoyer audit réseau au moins une requête et/ou au moins un message d'au moins un utilisateur, en fonction d'au moins une donnée et/ou d'au moins un service présenté;
- communiquer avec au moins un serveur d'au moins une tierce partie de type serveur USSD quelconque, de type serveur de portail embarqué ou autre.

Avantageusement, ledit client USSD comprend au moins un module couche de transport incluant au moins un module de cryptage, au moins un module décodeur interpréteur et au moins un module de présentation.

Dans une variante, ledit client USSD comprend au moins un module navigateur.

Dans une autre variante, ledit module navigateur est une application d'une tierce partie et/ou spécifique au terminal.

Dans un exemple de réalisation, ledit client USSD est basé sur au moins un interpréteur de langage structuré, de type HTML ou de type XML ou de type VXML ou de type CCXML ou autre.

Dans un autre exemple de réalisation, ledit module de présentation est un module de transformation en langage de présentation quelconque et comprend des moyens pour modifier les contenus traités (modification, filtrage, suppression, ajout de contenus et autres).

Dans un mode préféré de mise en oeuvre, ledit client USSD comprend des moyens pour fonctionner comme un serveur USSD vis-à-vis d'au moins un autre terminal et/ou d'au moins un réseau.

La présente invention est également relative à un procédé de traitement mis en oeuvre par ledit système, composé d'au moins :
- une étape d'envoi d'au moins une requête d'au moins un utilisateur à partir d'un client USSD vers un réseau de télécommunication, ouvrant une session entre ledit client USSD et ledit réseau ;
- une étape d'interprétation de la requête de la part dudit réseau, suivi d'un renvoi d'au moins une information à au moins un terminal;
- une étape de traitement de l'information reçue par ledit client USSD et d'affichage de ladite information sous forme textuelle et/ou graphique sur un écran du terminal mobile;
- une étape de choix et de validation d'au moins un choix à l'aide d'au moins un simple appui sur un clavier;
- une étape d'envoi audit réseau dudit choix de l'utilisateur ;
- une étape d'interprétation dudit choix par ledit réseau et d'envoi d'au moins une information requise ;
- une étape d'affichage dudit choix reçu sur ledit écran de l'utilisateur.

Avantageusement, l'étape de choix et de validation d'au moins un choix est effectuée à l'aide d'au moins un simple appui sur des zones de texte et/ou graphiques spécifiques, à l'aide d'au moins une touche d'un clavier dudit terminal.

Dans un premier exemple de réalisation, ledit procédé comporte une étape de support et de gestion d'au moins une fonctionnalité « sonnerie », par l'utilisateur et/ou par le service réseau.

Dans un deuxième exemple de réalisation, ledit procédé comporte une étape de support et de gestion d'au moins une fonctionnalité publicités et/ou informations personnalisées au cours d'au moins une session de l'utilisateur, lesdites publicités et/ou informations personnalisées étant dynamiques ou statiques.

Dans un troisième exemple de réalisation, ledit procédé comporte une étape de support et de gestion des propriétés dudit terminal et du réseau auquel ledit terminal est attaché.

Dans un quatrième exemple de réalisation, ledit procédé comporte une étape de support et de gestion d'au moins une fonctionnalité complémentaire, relative à au moins une application présente dans ledit terminal mobile.

Dans un cinquième exemple de réalisation, ledit procédé comporte une étape de support et de gestion de la fonctionnalité «signet USSD».

Dans un exemple particulier de réalisation, ledit procédé comporte une étape d'externalisation d'au moins un contenu et/ou d'au moins une page courante, et/ou d'au moins une session ou partie de session, ladite étape d'externalisation étant une sauvegarde ou un archivage ou un transfert vers une quelconque application externe audit client USSD.

Dans un autre exemple particulier de réalisation, ledit procédé comporte une étape de restauration d'au moins une session dans ledit terminal mobile.

Dans un exemple préféré de réalisation, ledit procédé comporte une étape de gestion visuelle d'au moins une session, comprenant la durée de ladite session, ainsi que la durée de l'interactivité de l'utilisateur pendant ladite session et une vérification de la continuité de ladite session.

Dans un autre exemple préféré de réalisation, ledit procédé comporte une étape de gestion d'un ou de plusieurs messages USSD comme au moins un message USSD, dit message virtuel USSD.

Avantageusement, ledit message virtuel USSD contient du texte, des images, des graphiques ou bien des contenus audio-visuels.

Dans un mode de mise en oeuvre, ledit procédé comporte une étape de simulation et/ou de gestion d'au moins deux sessions USSD activées en parallèle pour un même terminal.

Dans un autre mode de mise en oeuvre, ledit procédé comporte une étape de personnalisation d'au moins un service pour au moins un utilisateur par ledit client USSD et/ou à distance par ledit réseau.

Dans un mode préféré de réalisation, ledit procédé comporte une étape de cryptage, avec ou sans indication visuelle, des données ou/et des services par au moins une clé de sécurité personnalisée ou par au moins une sécurité gérée automatiquement par ledit client et ledit serveur.

La présente invention sera mieux comprise à l'aide d'exemples de réalisation non limitatifs décrit par la suite.

Dans le cas classique l'envoi d'un message USSD s'effectue en tapant sur le clavier du terminal une séquence, par exemple *123*1*2#, suivi d'un appui sur une touche « entrée ».

Lorsqu'un message USSD est émis à partir du mobile, il est toujours dirigé vers un « home network » en anglais (réseau de domiciliation), au sein duquel se trouve un équipement USSD, par exemple un serveur USSD avec navigateur, dit dans la présente invention « Centre USSD ». Ce Centre USSD du réseau interprète la demande USSD et par la suite renvoie une information et/ou un menu demandé.

Par exemple, un menu avec une liste de choix est affiché sur un écran d'un terminal, à chaque choix correspond par exemple un numéro « 1 », « 2 » ou « 3 ». Afin de sélectionner sont choix, l'utilisateur doit appuyer sur le clavier le bon numéro, et ensuite valider, à l'aide d'une une autre touche.

Ce mode manuel de navigation USSD ne nécessite aucune modification à faire dans le terminal de l'utilisateur et les services réseaux sont directement utilisables.

Cependant cette solution de navigation USSD n'est pas satisfaisante, de point de vue ergonomie et convivialité. L'utilisateur perd beaucoup de temps dans la navigation manuelle. Aussi, avec l'augmentation de la complexité des terminaux mobiles en termes de fonctionnalités, surgit un problème technique supplémentaire à résoudre : plus le téléphone est compliqué (par exemple avec un clavier étendu, des touches spéciales, des touches supplémentaires, écran tactile, évolution « smart phone » en anglais (téléphone portable évolué qui offre des fonctionnalités d'assistant personnel) et autres), plus il devient difficile pour l'utilisateur de naviguer à l'aide d'appuis de touches différentes.

Le client USSD mobile embarqué, objet de la présente invention, contribue pour l'enrichissement de l'expérience des utilisateurs, à l'aide des avantages qu'il propose vis-à-vis de l'ergonomie, mais surtout vis-à-vis de l'amélioration et de la multiplication de services réseaux sur de divers sujets tels que la sécurité, la facilité et le maintien de la connexion, le temps de réponse et d'accès à l'information, les nouvelles fonctionnalités, la personnalisation des services et des données, et autres).

Dans la présente invention est entendue sous la notion de « données » au moins une information et/ou au moins une instruction et/ou au moins un contenu structuré ou non, les données étant de type textuel, graphique, audiovisuel ou autre quelconque.

La présence d'un client USSD embarqué dans le terminal, muni d'un navigateur avec une interface utilisateur pallie aux inconvénients susmentionnés de l'art intérieur. Ledit client est installé comme une application standard dans le téléphone mobile. Ledit navigateur compris dans le client est basé sur au moins un interpréteur de langage structuré (par exemple descripteur HTML (« HyperText Markup Language » en anglais, langage hypertexte à balise), XML, VXML, CCXML (« Call Control XML » en anglais, XML pour la fonctionnalité contrôle d'appel) ou autre). Dans une autre variante ledit client ne comprend pas de navigateur propre est coopère avec au moins un navigateur, ou bien avec une application, spécifique au terminal.

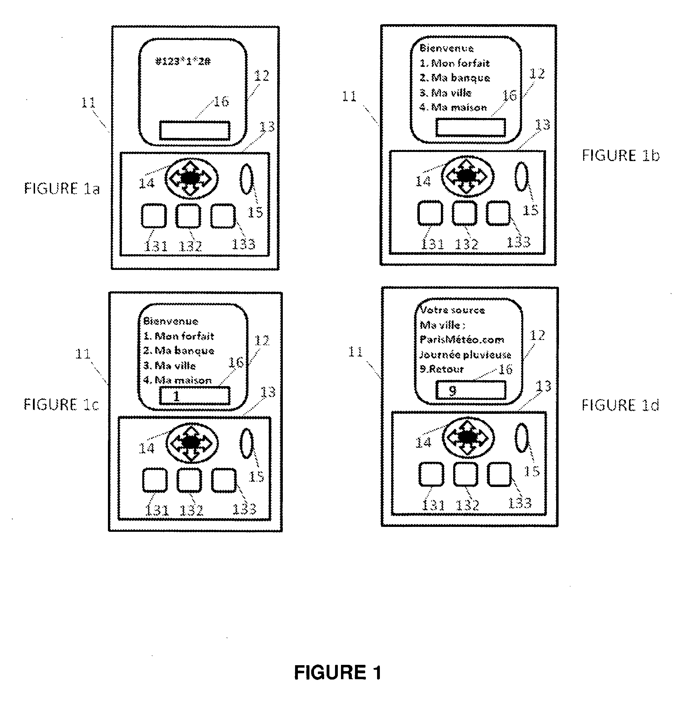

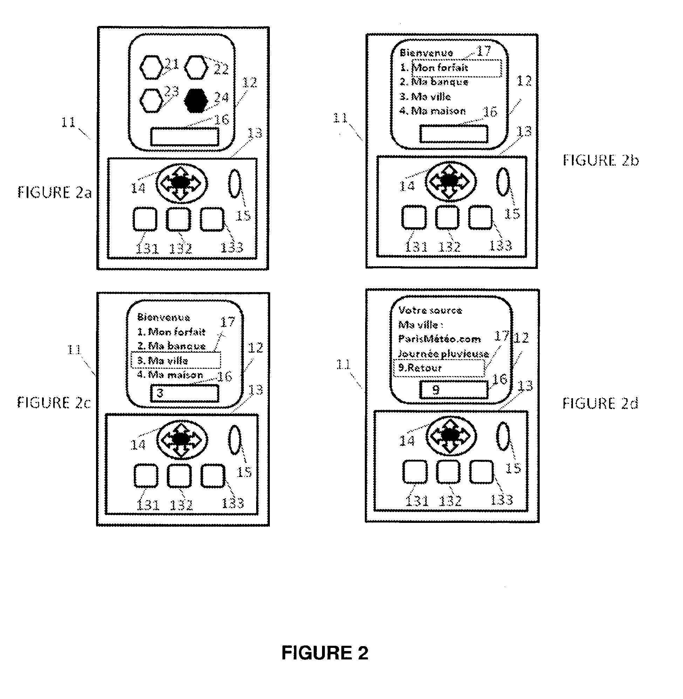

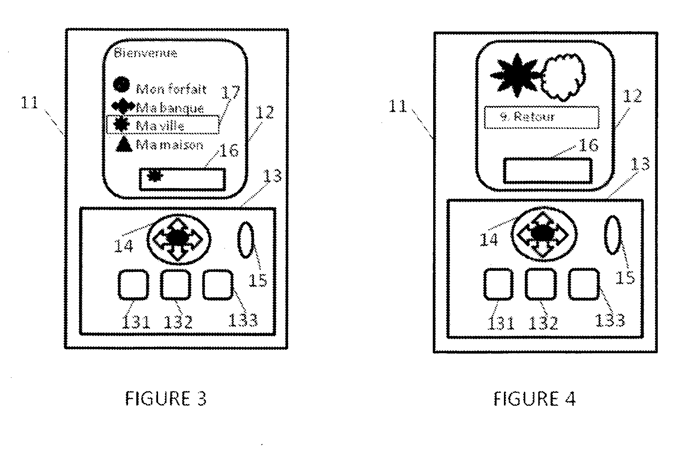

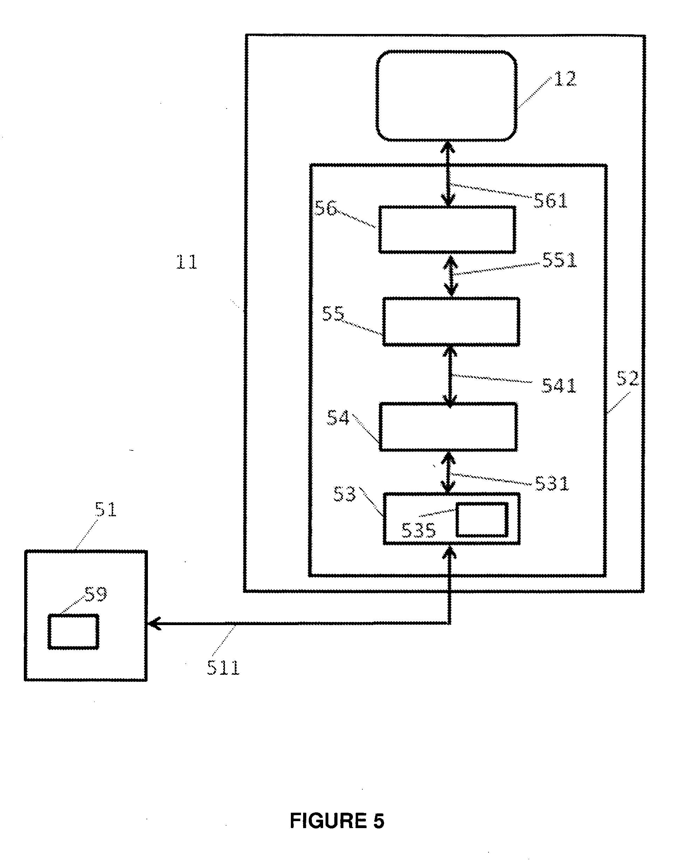

La présente invention sera mieux comprise à l'aide des figures en référence aux dessins annexés qui représentent respectivement :
- en figure 1a, 1b, 1c et 1d, une présentation de l'interface utilisateur et des étapes de navigation dans le cas où le terminal mobile ne possède pas de module client USSD embarqué ;
- en figure 2a, 2b, 2c et 2d, une présentation de l'interface utilisateur et des étapes de navigation dans le cas où ledit client USSD, objet de la présente invention est embarqué dans le terminal mobile ;
- en figure 3, une variante particulière de présentation de l'interface utilisateur dans le cas où ledit client USSD, objet de la présente invention est embarqué dans le terminal mobile ;
- en figure 4, un autre exemple préféré de présentation de l'interface utilisateur et d'affichage dans le cas où le client USSD, objet de la présente invention est embarqué dans le terminal mobile et coopère avec un navigateur tierce présent dans le mobile;
- en figure 5, un exemple d'architecture générale du système client-serveur et plus particulièrement, du module client USSD embarqué dans le terminal.

La figure 1 (1a, 1b, 1c et 1d), présente une interface utilisateur et les étapes de navigation dans le cas où le terminal mobile ne possède pas de client USSD embarqué.

Le module (11) représente un téléphone portable avec son écran (12) et son clavier (13) comprenant des touches, par exemple (131) (correspondant au chiffre « 1 »), (132) (correspondant au chiffre « 2 ») et (134) (correspondant au chiffre « 3 »). Une touche de navigation (14) est également présente permettant la navigation à l'aide d'appuis (gauche, droite, haut, bas) et la sélection à l'aide d'un appui central au milieu de la touche. Un bouton de validation (15) ou d' «entrée» standard est également présent. Les étapes de navigation sont détaillées à l'aide de la figure 1a, 1b, 1c et 1d.

Lorsque l'utilisateur souhaite se connecter au Centre USSD, il rentre à partir du clavier (13) un code USSD, par exemple :
<<#123*1*2#>>

Ce code est alors envoyé à un Centre USSD, une session est alors ouverte et ce Centre USSD renvoie un menu demandé, comme par exemple sur l'écran (12) est affiché le menu suivant:
« Bienvenue
   1. Mon forfait et options
   2. Ma banque
   3. Ma ville
   4. Ma maison »

La rubrique « Ma banque » correspond à un exemple de service avec une session USSD cryptée, la rubrique « Ma ville» correspond à un exemple de service pour la récupération de données de l'Internet via USSD et la rubrique « Ma maison » correspond à un exemple de service pour la gestion domotique à l'aide de deux terminaux USSD.

Le procédé de navigation dans ce cas inclut les étapes suivantes :
- Une étape de numérotation d'un code USSD à partir du clavier (13) et de validation de la numérotation à l'aide d'un appui sur la touche de validation (15), illustrée en figure 1a ;
- Une étape de connexion et d'affichage du menu, illustrée en figure 1b ;
- Une étape de numérotation du choix à partir du clavier (13) à l'aide des touches (131), (132) ou (133), ce choix étant ensuite affiché dans une fenêtre (16) en bas de l'écran (12), et de validation de ce choix à l'aide de la touche de validation (15), illustrée en figure 1c ;
- Une étape d'affichage du contenu sélectionné, illustrée en figure 1d, qui affiche au moins une information sollicitée, par exemple :
   « Votre source Ma Ville:
      ParisMeteo.com
      Journée pluvieuse
      9. Retour »

Lorsque l'utilisateur souhaite revenir par exemple dans le menu précédent, il numérote à partir de son clavier le numéro affiché pour le retour, visualisé ensuite sur l'écran (16), et valide avec la touche de validation (15) par exemple.

La figure 2 (2a, 2b, 2c et 2d) présente un exemple de réalisation non limitatif d'un cas de navigation, lorsque le terminal mobile possède un client USSD embarqué.

Lorsque l'utilisateur sollicite un service, il se connecte directement à partir de l'interface utilisateur du terminal mobile, qui est par exemple présenté sous forme d'icônes (21), (22), (23) et ainsi de suite, disposées sur l'écran (12) du terminal mobile (11). Ledit client USSD (24) est également présent et accessible, directement ou indirectement, à partir de cette interface. A l'aide de la touche de navigation (14), l'utilisateur sélectionne et active ledit client USSD (ou une application coopérative).

Une liste prédéfinie et personnalisable de « Bookmarks » USSD en anglais, un marque-page, connu encore sous le terme « signet » en français, est alors affichée. Lorsque l'utilisateur a fait son choix, la requête correspondante USSD est alors envoyée au réseau et ce dernier renvoie un menu de services demandés, par exemple le menu suivant:
« Bienvenue
   1. Mon forfait et options
   2. Ma banque
   3. Ma ville
   4. Ma maison »

Le procédé de navigation dans ce cas inclut les étapes suivantes :
- Une étape de défilement à l'aide de la touche de navigation (14), de positionnement sur l'icône (24) et de validation de la sélection à l'aide d'un appui central sur la touche de navigation (14), illustrée en figure 2a;
- Une étape optionnelle d'affichage d'une liste prédéfinie et personnalisable de « Bookmarks » et de choix de l'utilisateur dans cette liste ;
- Une étape automatique d'envoi de requête USSD vers le réseau, suivi d'un affichage du menu, illustrée en figure 2b. Un curseur de sélection (17) est affiché désignant un emplacement initial par défaut dans le menu présenté ;
- Une étape de défilement du curseur de sélection (17) à l'aide de la touche de navigation (14) et de validation de la sélection à l'aide de la touche de navigation (14), illustrée en figure 2c. Lorsque l'utilisateur a sélectionné son choix, ce choix est affiché automatiquement dans une fenêtre (16) en bas de l'écran (12).
- Une étape d'affichage du contenu sélectionné, illustrée en figure 2d, par exemple :
   « Votre source
      Ma Ville:
      ParisMeteo.com
      Journée pluvieuse
      9. Retour »

Avantageusement, la navigation et la validation d'un choix, est effectuée à l'aide par exemple de la touche de validation (15) ou bien à l'aide de la touche de navigation (14), ou bien à l'aide d'une touche quelconque prédéfinie du clavier numérique (13), ou encore à l'aide d'une « softkey », en anglais (touche virtuelle).

Avantageusement, la touche de validation (15) et confondue avec la touche de navigation (14).

La figure 3 présente un exemple particulier de la figure 2b, d'un cas d'amélioration à l'aide d'éléments graphiques pour la présentation des listes de menus, qui sont affichés suite à une requête de l'utilisateur. Dans une variante les éléments graphique sont envoyés par le réseau. Dans une autre variante les éléments graphiques sont stockés dans le terminal et utilisé par le client pour l'affichage. Ladite utilisation est prédéfinie ou bien personnalisable par ledit client USSD ou à distance par le réseau. Dans un mode préféré de réalisation, la présentation des listes de menus, est effectuées entièrement avec des éléments graphiques.

La figure 4 présente un exemple de réalisation de la figure 2d. Le client USSD comprend une couche de transformation graphique qui est apte à traduire les données sous forme de page enrichie et/ou graphique, par exemple page HTML, telle que présentée à l'exemple de la figure 4.

Ledit client USSD, tel que décrit à l'aide des figures 2, 3, 4 et 5 présente les caractéristiques et les avantages suivants :
- Transparence de la connexion pour l'utilisateur (induit de la technologie USSD) ;
- Interactivité USSD améliorée pour l'utilisateur. L'utilisateur a la possibilité d'effectuer au moins une des étapes du procédé à plusieurs reprises et d'effectuer au moins une itération desdites étapes a l'aide de simples touches de navigation ;
- Support et gestion de la fonctionnalité « sonnerie » lors de réception d'un message USSD. Cette sonnerie étant soit non-présente soit systématique pour les terminaux, représente un inconvénient majeur et connu pour le rendu du service. Afin de compenser ce défaut, l'option de sonnerie est soit activée, soit désactivée soit contrôlée par l'utilisateur, par le service réseau et/ou par le contenu.
- Support et gestion de la fonctionnalité « Branding » en anglais, publicité personnalisée pour la valorisation et le management d'une marque. Par exemple, un mode de mise en oeuvre de cette fonctionnalité est une page de type HTML relative à une publicité et/ou une marque et/ou une appellation, qui est affichée en tant que fond d'écran ;
- Support et gestion de la fonctionnalité « Sponsoring » en anglais, publicité dynamique ou statique géré par le service et/ou le client USSD, et affiché par le client USSD dans une zone par exemple réservée ;
- Affichage des informations de session, comme par exemple le nombre de pages USSD parcourues, le numéro d'au moins une page, l'affichage d'au moins un choix déjà sélectionné, le retour vers une page en mémoire cache au niveau du client ;
- Support et gestion des propriétés du terminal et du réseau auquel il est attaché. Le client USSD peut décider d'envoyer ces propriétés sur demande ou automatiquement lors de la session USSD et à destination des divers services réseaux. De cette manière le client USSD gère par exemple les paramètres IMEI (« International Mobile Equipment Identity », identité internationale du terminal mobile), MCC (« Mobile Country Code » en anglais, code mobile du pays), MNC (« Mobile Network Code » en anglais, code mobile du réseau), LAC (« Local Area Code » en anglais, code local d'un endroit) et autres ;
- Support et gestion des propriétés du terminal, concernant des fonctionnalités complémentaires, relatives à des applications implémentées dans un téléphone mobile (11) de la part d'un constructeur de terminaux, ou bien des applications en provenances d'un opérateur de télécommunications, ou bien d'un fournisseur de services ou bien d'une quelconque tierce partie, ces applications étant téléchargées au préalable sur le terminal mobile (11) ou bien étant situées dans un serveur distant quelconque, auquel le terminal (11) a accès. Par exemple, lorsque le terminal mobile (11) possède une fonctionnalité de type géo-localisation, telle que la fonctionnalité GPS (« Global Service for Positionning» en anglais, service global de positionnement dans le sens d'une géo-localisation), le module client (52) comprend des moyens pour interpréter et pour gérer des informations et des services liés à la géo-localisation. Dans ce cas, à l'aide du client (52), un utilisateur a la possibilité d'accéder à des services classiques de la fonctionnalité GPS, mais également à des services à forte valeur ajoutée, tels que des services d'urgences, de traçabilité et d'alertes. Un autre exemple de réalisation, sont les services liés à des points d'intérêt ou encore dits POI (« Points Of Interest » en langue anglaise). Dans un exemple préféré de réalisation, ladite fonctionnalité « Branding », c'est-à-dire ladite publicité personnalisée est effectuée en fonction de la géo-localisation de l'utilisateur et/ou de son terminal mobile (11). Ces exemples de réalisation de la gestion et du support des propriétés du terminal sont également fonctionnels dans le cas où la géo-localisation est effectuée à l'aide de la reconnaissance de l'identité d'au moins une cellule d'un réseau de télécommunication mobile, « Cellular Identification » en anglais. à l'aide de bornes de réseaux locaux, comme par exemple le WiFi (« Wireless Fidelity » en anglais ou réseau local sans fil) et autres.
- Support et gestion de la fonctionnalité « signet » USSD ou autres. Dans un exemple particulier de réalisation ledit signet est balisé par exemple comme un formulaire à remplir hors connexion USSD, et permettant ainsi d'éviter les désagréments des sessions interrompues. Dans un autre exemple de réalisation, ledit signet est hiérarchisé ;
- Cryptage des données ou/et des services de bout en bout. Dans les réseaux mobiles actuels 2G-3G l'information véhiculée par les canaux USSD n'est pas sécurisée. Selon les requêtes des opérateurs, des utilisateurs ou des tierces parties, cette information est cryptée par le client USSD de bout en bout au niveau des contenus et/ou au niveau des services. Par exemple, pour au moins un service USSD donné, l'utilisateur à la possibilité d'installer une clé de sécurité personnalisée ou bien d'utiliser une sécurité gérée automatiquement par le client (52) et le serveur (51). Dans un mode de mise en oeuvre, le client USSD (52) propose une indication visuelle dynamique de sécurité USSD;
- Au cours ou en dehors de la navigation, le client USSD possède la capacité de sauvegarder une ou plusieurs pages dans le terminal, d'envoyer au moins une page sélectionnée ou au moins une partie d'au moins une page sélectionnée vers le réseau, par exemple sous forme de SMS (« Short Message Service » en anglais, court message textuel pouvant être émis et reçu depuis un téléphone portable), sous forme de MMS (« Multimedia Message Service » en anglais, message multimédia pouvant être émis et reçu depuis un téléphone portable), sous forme d'e-mail, et autres. De même le client USSD possède la capacité d'archivage complet ou partiel de la session.
- Indication et gestion d'une application « navigation skin » en anglais, application téléchargeable sur les réseaux mobiles qui permet aux opérateurs de personnaliser dans le terminal la navigation ou/et les services de leurs abonnés ;
- Des applications supplémentaires accessibles depuis la navigation, par exemple par un simple appui sur des zones de texte et/ou graphiques spécifiques à l'aide desquelles on lance des applications ;
- Fonctionnalité de restauration d'une session par le client USSD. Cette option de restauration d'une session est activée pour le cas où une session est interrompue. Ledit client USSD gère alors une restauration automatique en se reconnectant sur un service réseau donné, via un canal de communication quelconque, et ceci de manière transparente pour la navigation;
- Fonctionnalité de gestion et de vérification de la durée et de la continuité d'une session USSD. Il est bien connu par l'homme de l'art, que la durée d'une session USSD est inconnue par l'utilisateur, et qu'une session USSD, pendant laquelle l'utilisateur reste passif un certain temps (par exemple pendant une minute), est interrompue sans indication quelconque. Afin de rendre l'interaction USSD encore plus ergonomique pour l'utilisateur, la solution client USSD (52) possède une gestion visuelle de la session, de la durée de cette session, ainsi que de la durée de l'interactivité de l'utilisateur pendant cette session et une vérification de la continuité de la session. Dans un mode de mise en oeuvre, la session est interrompue après une durée déterminée d'inactivité et un message d'avertissement est affiché sur l'écran (12) du terminal (11). Dans un autre mode de mise en oeuvre, la session est automatiquement prolongée de manière transparente pour l'utilisateur c'est-à-dire, sans affichage de message d'avertissement sur l'écran (12) du terminal (11). Dans encore un autre mode de mise en oeuvre, le client (52) possède des moyens pour personnaliser cette gestion ;
- Gestion de message virtuel USSD, c'est-à-dire la gestion d'un ou de plusieurs messages USSD comme au moins un message USSD, dit message virtuel USSD ou bien la gestion d'un ou de plusieurs messages USSD regroupés dans un message USSD, dit long message USSD. A l'aide du client USSD, le canal dédié à ce long message USSD, est utilisé par exemple comme un canal de téléchargement de données, par exemple du texte, des images, des graphiques ou bien des contenus audio-visuels.

Un exemple de réalisation de l'architecture du système client-serveur et plus particulièrement de l'architecture module client USSD, objet de la présente invention, est présenté en figure 5.

Le terminal mobile (11) comporte un module client USSD (52) intégré sous forme logicielle dans la plateforme native de télécommunications du terminal mobile (11).

Le client USSD (52) comprend un module (53) couche de transport, incluant un module (535) de cryptage de services, qui réceptionne les données USSD à partir d'un réseau quelconque (51), par exemple un réseau qui comprend un Centre USSD (59) et les transmet via un lien (531) à un module (54) dit décodeur interpréteur. Ledit module (54) a par exemple pour rôle de décoder les messages USSD et de les convertir en un langage de type structuré. Ledit module (54) transmet les données décodées via un lien (541) à un module (55) couche de présentation, par exemple un module de transformation en langage HTML ou en langage de présentation quelconque. Le rôle du module (55) est de formater les données pour l'affichage. Avantageusement ledit module de présentation (55) comprend des moyens pour modifier les contenus traités (modification, filtrage, suppression, ajout de contenus et autres). Ce module (55) envoie par la suite les données formatées pour la présentation via un lien (551) à un module (56) de type navigateur (ou « Browser » en anglais) classique de type WEB. De plus, le client USSD (52) à la capacité de communiquer et de s'adapter automatiquement à au moins un système client-serveur tierce de type serveur USSD quelconque, de type « On-Device-Portal » («On-Device-Portal» en anglais, portail embarqué) ou autre, et cela de manière transparente ou déclarée pour ledit serveur. Les données issues du module navigateur (56) son envoyées via un lien (561) vers l'écran d'affichage (12) du terminal (11).

L'architecture du client USSD (52) présentée à la figure 5, lui permet d'intégrer au moins un navigateur, par exemple de type WEB ou application quelconque, d'un terminal mobile ou d'un utilisateur. Également, cette même architecture permet au client USSD de s'intégrer dans au moins un navigateur par exemple de type WEB ou application quelconque, d'un terminal mobile ou d'un utilisateur.

Lorsqu'une requête est envoyée par l'utilisateur au réseau (51) à l'aide du lien (511), une session est ouverte, et le réseau (51) et le client USSD (52) échangent successivement des données via la couche de transport (53), le décodeur interpréteur (54), la couche de présentation (55) et la couche de navigation (56). Ladite couche de navigation transmet les données à afficher au format voulu via un lien (561) et les données sont affichée sur l'écran (12) du terminal mobile (11).

Les fonctionnalités et les caractéristiques dudit client USSD décrites sont des exemples de réalisation présentés à titre illustratif et non-limitatif. De nombreuses autres fonctionnalités sont implémentées à la demande ou lors d'une personnalisation pour l'utilisateur pour dudit client USSD.

De part sa nature basée sur un standard USSD natif, le client USSD, objet de la présente invention, est opérationnel avec tout type de services réseaux USSD.

Ledit client USSD comporte un module d'amélioration de la présentation graphique (56) qui supporte différentes présentation graphique pour l'interface utilisateur. Ces présentations sont basées sur des descripteurs de langages structurés et de formats, tels que par exemple les formats standards CSS (« Cascading Style Sheet » en anglais, format de feuille de style pour navigateurs internet), DOM (« Document Object Model » en anglais, modèle de document indépendant de tous les langages de programmation et de toutes les plates-formes), SMIL (« Synchronized Multimedia Integration Language » en anglais, langage permettant de synchroniser divers éléments multimédia sur une page WEB), SVG (« Scalable Vector Graphics » en anglais, langage de description d'ensembles graphiques vectoriels basé sur XML), LASER (« Lightweight application scene représentation » en anglais, application allégée pour présentation de scène), SAF (« Simple Aggregation Format », format binaire pour intégrer dans un même flux du contenu LASeR et des contenus audio/vidéos), ou tels que les formats propriétaires comme « Macromedia Flash »®, ou un format donné de type « Rich Media » en anglais, medias enrichis (formats utilisant des techniques avancées pour le transfert et l'affichage de données multimédias (audios, vidéos, images fixes, graphiques, texte) et pour une interface utilisateur interactive.

Dans un cas général, la présentation est soit sous forme de listes, soit sous forme multimédias quelconque, soit mixte.

De préférence, ledit client USSD (52) a la capacité de gérer des fonctionnalités avancées à valeur ajoutée, comme par exemple :
- Effectue un rétablissement automatique de session USSD interrompue. Lorsqu'une session USSD est interrompue, par exemple pour cause d'expiration, les données concernant le point d'interruption sont renvoyées vers le service USSD en utilisant une nouvelle session USSD. Dans un mode réalisation différent les données concernant le point d'interruption sont avantageusement renvoyées via le canal SMS par exemple à un service USSD. Ceci permet au service USSD de réactiver la session à partir du point d'interruption référencé et ceci du réseau vers client USSD. Ces deux procédés de rétablissement de session USSD expirée sont transparents pour l'utilisateur ;
- A la capacité de commuter la session USSD en cours vers un appel téléphonique, vers un appel SMS, vers un appel de type Internet ou autre ;
- Offre également l'option de faire une analyse des pages déroulées par le client et d'effectuer une synchronisation entre le client et le serveur au regard du choix utilisateur, c'est-à-dire d'effectuer une synchronisation entre les pages mises en mémoire « cache » (« cache memory » en anglais, mémoire temporaire de sauvegarde durant au moins une partie d'une session) sur le serveur et la page actuelle parmi les pages déjà déroulées ;
- Offre la possibilité de restaurer l'historique de la navigation de la dernière session et/ou d'au moins une session archivée ;
- Offre la possibilité d'effectuer deux ou plusieurs choix simultanés depuis la même page de navigation;
- Possède la capacité de simuler ou/et de gérer plusieurs sessions USSD activées en parallèle pour le même terminal, permettant ainsi à l'utilisateur de naviguer dans plusieurs services en même temps. Dans un exemple de réalisation préféré, cette capacité est mise en place à l'aide de mémoire « cache » au niveau du service USSD et client USSD;
- Possède la capacité de contrôler la navigation USSD par des commandes vocales ;
- Possède la capacité de s'intégrer et d'assurer la navigation, ainsi que l'ensemble des services décrits dans un terminal mobile (11) comprenant un écran tactile (12). Dans ce cas, un simple appui de l'utilisateur sur l'écran tactile (12), sur une zone précise, lui permet d'accéder à une multitude d'applications et de services ;
- Possède la capacité de rétablir les informations requises par l'utilisateur à partir d'une synthèse vocale ;
- Possède la capacité de fonctionner comme un serveur USSD, dans un terminal, afin de communiquer avec d'autres terminaux clients à travers ou pas du réseau mobile. Par exemple, ceci est utilisé pour la prise de contrôle d'un terminal USSD par un autre terminal (USSD ou pas), pour la récupération d'informations d'un terminal, pour la navigation et pour le déclenchement de services à distance dans un terminal, pour la transformation d'un terminal USSD en appareil de télécommande quelconque et/ou en serveur d'applications quelconques;
- Possède la capacité de détecter une session USSD conventionnelle et de proposer assistance à la navigation ou bien la prendre automatiquement en charge.

Dans une variante, l'intelligence du système client-serveur est située dans le client USSD (52).

Dans une autre variante, l'intelligence du système client-serveur est située dans le service USSD (51).

Encore dans une autre variante, l'intelligence du système client-serveur est située dans le service USSD (51) et dans le client USSD (52).

## Revendications

1. Système de télécommunications pour l'utilisation d'applications et de services numériques, embarqué dans un terminal mobile de télécommunications, tel qu'il est un client numérique (52) basé sur le protocole USSD, dit client USSD (52), étant situé dans au moins un terminal mobile (11) et comprenant:
- au moins un module (53) couche de transport comprenant des moyens pour:
∘ recevoir et interpréter au moins un second message USSD, contenant au moins une donnée et/ou au moins une instruction, en provenance d'au moins un réseau de télécommunications (51);
∘ envoyer ledit au moins un second message USSD contenant au moins une donnée et/ou au moins une instruction à un module (54) décodeur interpréteur;
∘ recevoir au moins un premier message USSD, en provenance du module (54) décodeur interpréteur, contenant au moins une donnée et/ou au moins une instruction ;
∘ renvoyer audit réseau (51) ledit au moins un premier message USSD ;
- ledit au moins un module (54) décodeur interpréteur comprenant des moyens pour :
∘ recevoir et décoder ledit au moins un second message USSD en provenance dudit module (53) couche de transport, et pour interpréter ledit second message USSD en au moins un langage de type structuré ;
∘ envoyer à un module de présentation (55) ledit au moins un second message en au moins un langage de type structuré ;
Remis lors de la procédure orale en date du 08 avril 2014 pour la demande de brevet européen n° 10730542.7
∘ recevoir à partir du module de présentation (55) au moins un premier message en au moins un langage de type structuré ;
∘ envoyer audit module (53) couche de transport, ledit au moins un premier message USSD comprenant au moins une donnée et/ou au moins une instruction ;
- ledit au moins un module de présentation (55) comprenant des moyens pour :
∘ recevoir et formater pour un affichage, au moins une donnée d'au moins un langage de type structuré en provenance dudit module (54) décodeur interpréteur;
∘ envoyer à un module de navigation (56) au moins une donnée formatée en un langage de type structuré;
∘ recevoir du module de navigation (56) au moins une donnée en un langage de type structuré ;
∘ envoyer audit module (54) décodeur interpréteur au moins une donnée en au moins un langage de type structuré ;
- ledit au moins un module de navigation (56) comprenant des moyens pour :
∘ recevoir dudit module de présentation (55) au moins une donnée formatée en un langage de type structuré;
∘ présenter sous forme d'au moins une liste prédéfinie et personnalisable de Bookmarks, au moins un service USSD ;
∘ afficher à l'aide d'une interface utilisateur interactive, ladite liste de Bookmarks sous forme textuelle et/ou graphique sur un écran (12) dudit terminal mobile (11);
∘ interpréter au moins un choix effectué à l'aide d'au moins un simple appui par une personne physique abonnée à au moins un réseau, sur au moins une touche d'un clavier (13) dudit terminal (11), en fonction dudit au moins un service affiché sur ledit écran (12) ;
∘ envoyer audit module de présentation (55) au moins une donnée en fonction dudit service choisi par ladite personne physique abonnée à au moins un réseau ;
∘ afficher sous forme textuelle et/ou graphique sur l'écran (12) dudit terminal mobile (11) et présenter sur ledit terminal mobile (11) au moins une donnée et/ou au moins une instruction en provenance dudit réseau (51).

2. Système selon la revendication 1, **caractérisé en ce que** ledit module (53) couche de transport comprend au moins un module (535) de cryptage de données et/ou de services.

3. Système selon la revendication 1 ou 2, **caractérisé en ce qu'**il comprend des moyens pour communiquer avec au moins un serveur USSD (59) situé dans un réseau de télécommunications (51), de type serveur USSD quelconque, de type serveur de portail embarqué, de type serveur d'une tierce partie, une tierce partie étant un fournisseur d'applications et/ou de services et/ou de contenus et/ou d'un équipement quelconque.

4. Système selon l'une quelconque des revendications 1 à 3, **caractérisé en ce que** ledit module de navigation (56) est une application d'une tierce partie et/ou spécifique au terminal, une tierce partie étant un fournisseur d'applications et/ou de services et/ou de contenus et/ou d'un équipement quelconque.

5. Système selon l'une quelconque des revendications 1 à 4, **caractérisé en ce que** ledit module de présentation (55) est un module de transformation en langage de présentation quelconque et comprend des moyens pour modifier les contenus traités par au moins un filtrage, une suppression, et/ou un ajout de contenus et autres.

6. Système selon l'une au moins des revendications précédentes, **caractérisé en ce que** ledit module (54) décodeur interpréteur dudit client USSD (52) est basé sur au moins un interpréteur de langage structuré, de type HTML ou de type XML ou de type VXML ou de type CCXML ou autre.

7. Procédé de traitement mis en oeuvre par un système client USSD (52) embarqué dans un terminal mobile (11), ledit système client USSD comprenant au moins un module (53) couche de transport, incluant au moins un module (535) de cryptage de données et/ou de services, au moins un module (54) décodeur interpréteur, au moins un module de présentation (55), au moins un module de navigation (56), le procédé comprenant les étapes suivantes :
- une étape de réception par le module de navigation (56) d'au moins une donnée formatée en un langage de type structuré envoyée par le module de présentation (55) ;
- une étape de présentation par le module de navigation d'au moins un service USSD sous forme d'au moins une liste prédéfinie et personnalisable de Bookmarks;
- une étape d'affichage par le module de navigation à l'aide d'une interface utilisateur interactive, de ladite liste de Bookmarks sous forme textuelle et/ou graphique sur un écran (12) dudit terminal mobile (11);
- une étape d'interprétation par le module de navigation d'au moins un choix effectué à l'aide d'au moins un simple appui par une personne physique abonnée à au moins un réseau, sur au moins une touche d'un clavier (13) dudit terminal (11), en fonction d'au moins un service affiché sur ledit écran (12) ;
- une étape d'envoi par ledit module de navigation (56) audit module de présentation (55), d'au moins une donnée en fonction dudit service choisi par ladite personne physique abonnée à au moins un réseau;
- une étape de réception par ledit module de présentation (55) d'au moins une donnée en un langage de type structuré envoyée par ledit module de navigation (56);
- une étape d'envoi audit module (54) décodeur interpréteur, d'au moins une donnée en au moins un langage de type structuré par ledit module de présentation (55);
- une étape de réception par ledit module (54) décodeur interpréteur, à partir dudit module de présentation (55), d'au moins un premier message en au moins un langage de type structuré ;
- une étape d'envoi audit module (53) couche de transport, par ledit module (54) décodeur interpréteur, d'au moins un premier message USSD comprenant au moins une donnée et/ou au moins une instruction ;
- une étape de réception par ledit module (53) couche de transport, en provenance du module (54) décodeur interpréteur, dudit au moins un premier message USSD contenant au moins une donnée et/ou au moins une instruction ;
- une étape d'envoi à au moins un réseau de télécommunications (51) par ledit module (53) couche de transport, dudit au moins un premier message USSD ;
- une étape de réception et d'interprétation par ledit module (53) couche de transport d'au moins un second message USSD, contenant au moins une donnée et/ou d'au moins une instruction, en provenance dudit réseau de télécommunications (51);
- une étape d'envoi par ledit module (53) couche de transport, dudit au moins un second message USSD contenant au moins une donnée et/ou au moins une instruction, à un module (54) décodeur interpréteur;
- une étape de réception et de décodage dudit au moins un second message USSD en provenance dudit module (53) couche de transport et/ou d'interprétation dudit second message USSD en au moins un langage de type structuré, par ledit module décodeur interpréteur (54);
- une étape d'envoi par ledit module décodeur interpréteur (54) audit module de présentation (55), d'au moins un second message en au moins un langage de type structuré ;
- une étape de réception et formatage pour un affichage par ledit module de présentation (55), d'au moins une donnée d'au moins un langage de type structuré en provenance dudit module (54) décodeur interpréteur;
- une étape de envoi par ledit module de présentation (55) audit module de navigation (56) d'au moins une donnée formatée en un langage de type structuré;
- une étape d'affichage par ledit module de navigation, sous forme textuelle et/ou graphique sur un écran (12) dudit terminal mobile (11) et de présentation sur ledit terminal mobile (11) d'au moins une donnée et/ou d'au moins une instruction en provenance dudit réseau de télécommunications (51).

8. Procédé selon la revendication 7, **caractérisé en ce qu'**il comporte une étape de support et de gestion lors d'une réception par le terminal mobile (11) d'un message USSD, d'au moins une fonctionnalité « sonnerie » par ledit client USSD (52).

9. Procédé selon l'une des revendications 7 ou 8, **caractérisé en ce qu'**il comporte une étape de support et de gestion par le client USSD (52) d'au moins une fonctionnalité de publicités personnalisées au cours d'au moins une session USSD, lesdites publicités personnalisées étant dynamiques ou statiques.

10. Procédé selon l'une quelconque des revendications 7 à 9, **caractérisé en ce qu'**il comporte une étape de décision pour un envoi par ledit client USSD (52) lors d'une session USSD, des propriétés dudit terminal mobile (11) et/ou du réseau de télécommunications (51) auquel ledit terminal mobile (11) est attaché, à destination de divers services réseaux.

11. Procédé selon l'une quelconque des revendications 7 à 10, **caractérisé en ce qu'**il comporte une étape de support et de gestion par le client USSD (52), d'au moins une fonctionnalité complémentaire, relative à au moins une application implémentée dans ledit terminal mobile (11) de la part d'un constructeur de terminaux, et/ou relative à au moins une application en provenance d'au moins un opérateur de télécommunications, ou en provenance d'au moins un fournisseur de services ou en provenance d'au moins une quelconque tierce partie, ladite application étant téléchargée au préalable sur ledit terminal mobile (11) ou bien étant située dans un serveur distant quelconque, auquel ledit terminal (11) a accès.

12. Procédé selon l'une quelconque des revendications 7 à 11, **caractérisé en ce qu'**il comporte une étape d'externalisation d'au moins une session gérée par le client USSD (52) ou partie de session gérée par le client USSD (52), ladite étape d'externalisation étant une sauvegarde ou un archivage ou un transfert vers une quelconque application externe audit client USSD (52).

13. Procédé selon l'une quelconque des revendications 7 à 12, **caractérisé en ce qu'**il comporte une étape de gestion visuelle par le client USSD (52), d'au moins une session, comprenant la gestion visuelle de la durée de ladite session, ainsi que la gestion visuelle de la durée de l'interactivité de l'utilisateur pendant ladite session et une vérification de la continuité de ladite session.

14. Procédé selon l'une quelconque des revendications 7 à 13, **caractérisé en ce qu'**il comporte une étape d'amélioration à l'aide d'éléments graphiques pour la présentation des listes de menus, affichés suite à une requête de l'utilisateur..

15. Procédé selon l'une quelconque des revendications 7 à 14, **caractérisé en ce qu'**il comporte une étape de cryptage effectuée par le module (535) de cryptage du client USSD (52), avec ou sans indication visuelle, d'au moins une donnée et/ou d'au moins un service.

## Patentansprüche

1. Die Telekommunikationsanlage für Einsatz von Digitalanwendungen und Leistungen, eingebaut in Telekommunikationsterminal, wo sie Digitalkunde (52) ist, basiert auf USSD-Protokoll, USSD-Kunde (52) genannt, der sich in mindestens einem mobilen Terminal (11) befindet und folgendes einschließt:
- Mindestens ein Transportmodul (53), der Mittel enthält, um:
∘ Mindestens eine zweite USSD-Mitteilung, die mindestens Daten und/oder mindestens eine Anweisung von mindestens einem Telekommunikationsnetz (51) enthält, zu bekommen und zu interpretieren;
∘ Die angegebene mindestens eine zweite USSD-Mitteilung, die mindestens Daten und/oder mindestens eine Anweisung an einem Decoder-Interpreter-Modul (54) enthält, zu senden;
∘ Mindestens eine erste USSD-Mitteilung vom Decoder-Interpreter-Modul (54), die mindestens Daten und/oder mindestens eine Anweisung enthält, zu bekommen;
∘ Zurück an das angegebene Netz (51) mindestens eine erste USSD-Mitteilung zu senden;
- Den sogenannten Decoder-Interpreter-Modul (54), der Mittel enthält, um:
∘ Die sogenannte wenigstens zweite USSD-Mitteilung vom angegebenen Transportmodul(53) zu erhalten und decodieren und die sogenannte zweite USSD-Mitteilung in wenigstens einer strukturierten Sprache zu interpretieren;
∘ Zu einem Präsentationsmodul (55) die sogenannte wenigstens zweite Mitteilung in mindestens einer strukturierten Sprache zu senden;
∘ Vom Präsentationsmodul (55) mindestens eine erste Mitteilung in wenigstens einer strukturierten Sprache zu erhalten;
∘ Dem sogenannten Transportmodul (53) die sogenannte wenigstens erste USSD-Mitteilung, die wenigstens irgendwelche Daten und/oder wenigstens eine Anweisung enthält, zu senden;
- Den sogenannten zumindest einen Präsentationsmodul (55), der Mittel enthält, um:
∘ Wenigstens irgendwelche Daten in mindestens einer strukturierten Sprache vom angegebenen Decoder-Interpreter-Modul (54) zu erhalten und zur Visualisierung zu formatieren;
∘ Einem Navigationsmodul (56) wenigstens irgendwelche Daten, formatiert in strukturierter Sprache zu senden;
∘ vom Navigationsmodul (56) mindestens irgendwelche Daten in einer strukturierten Sprache zu erhalten;
∘ dem Decoder-Interpreter-Modul (54)mindestens Daten in wenigstens einer strukturierten Sprache zu senden;
- den sogenannten wenigstens einen Navigationsmodul (56), der Mittel umfasst, um:
∘ vom sogenannten Präsentationsmodul (55) wenigstens irgendwelche Daten, formatiert in einer strukturierten Sprache zu erhalten;
∘ mindestens eine USSD-Leistung als wenigstens ein vorher bestimmtes und personifiziertes Bookmark-Verzeichnis vorzustellen;
∘ mit Hilfe von interaktiver Anwenderinterface das sogenannte Bookmark-Verzeichnis in Text- und /oder Grafikform an einem Bildschirm (12) des angegebenen einem mobilen Terminals (11) zu visualisieren;
∘ mindestens eine Wahl, getroffen mit Hilfe von wenigstens einem einfachen Druck, von einem Einzelabonnent zu mindestens einem Netz, auf wenigstens einer Taste einer Tastatur (13) des angegebenen Terminals (11), in Abhängigkeit von mindestens einer Leistung, visualisiert auf dem Bildschirm (12) zu interpretieren;
∘ dem sogenannten Präsentationsmodul (55) wenigstens irgendwelche Daten in Funktion der sogenannten Leistung, gewählt vom sogenannten Einzelabonnent zu mindestens einem Netz zu senden;
∘ in Text und/oder Grafikform auf dem Bildschirm (12) des sogenannten einen mobilen Terminals (11) zu visualisieren und am angegebenen einen mobilen Terminal (11) wenigstens Daten und/oder mindestens eine Anweisung vom sogenannten Netz (51) vorzustellen.

2. Anlage entsprechend Anspruch 1, die **dadurch gekennzeichnet ist, dass** der sogenannte Transportmodul (53) mindestens einen Modul (535) für Daten- und/oder Leistungsverschlüsselung einschließt.

3. Anlage entsprechend Anspruch 1 oder 2, die **dadurch gekennzeichnet ist, dass** sie Mittel einschließt, um mit mindestens einem USSD-Server (59), angeordnet in einem Telekommunikationsnetz (51) zu kommunizieren, wie jeder USSD-Server, Geräte-Portal-Server, Server eines Dritten, wobei der Dritte Lieferant von Anwendungen und/oder Leistungen und/oder Inhalten und/oder jeglicher Ausrüstung ist.

4. Anlage entsprechend jedem der Ansprüche 1 bis 3, die **dadurch gekennzeichnet** ist, das der angegebene Navigationsmodul (56) Anwendung eines Dritten und/oder spezifische Anwendung für den Terminal ist, wobei der Dritte Lieferant von Anwendungen und/oder Leistungen und/oder Inhalten und/oder jeglicher Ausrüstung ist.

5. Anlage entsprechend jedem der Ansprüche 1 bis 4, die **dadurch gekennzeichnet ist, dass** der sogenannte Präsentationsmodul (55) Transformationsmodul für welche auch immer Präsentationssprache ist und Mittel für Modifizierung des bearbeiteten Inhalts durch mindestens eine Filterung, Löschung und/oder Ergänzung von Inhalt und anderen enthält.

6. Anlage entsprechend mindestens einem der vorigen Ansprüche, die **dadurch gekennzeichnet ist, dass** der angegebene Decoder-Interpreter-Modul (54), des sogenannten USSD-Kunden (52), auf mindestens einem Interpreter von strukturierten Sprachen wie HTML oder XML oder VXML oder CCXML oder anderen basiert.

7. Methode für Bearbeitung, realisiert in Anlage USSD-Kunde, (52) eingebaut in einem mobilen Terminal (11), die sogenannte Anlage USSD-Kunde, die mindestens einen Transportmodul (53) einschließt, der mindestens einen Modul (535) für Daten- und/oder Leistungsverschlüsselung, mindestens einen Decoder-Interpreter-Modul (54), mindestens einen Präsentationsmodul (55), mindestens einen Navigationsmodul (56) enthält, wobei die Methode folgende Schritte umfasst:
- Schritt für Erhalt vom Navigationsmodul (56) von wenigstens irgendwelchen Daten, die in einer strukturierten Sprache formatiert, vom Präsentationsmodul (55) gesendet sind;
- Schritt für Präsentation von Navigationsmodul von mindestens einer USSD-Leistung als wenigstens ein vorher definiertes und personifiziertes Bookmark-Verzeichnis;
- Schritt für Visualisierung vom Navigationsmodul durch Einsatz von interaktiver Anwenderinterface des angegebenen Bookmark-Verzeichnisses als Text- und/oder Grafikform an einem Bildschirm (12) an einem angegebenen mobilen Terminal (11);
- Schritt für Interpretierung von Navigationsmodul von mindestens einer Wahl, getroffen durch Benutzung von mindestens einem einfachen Druck von Einzelabonnent von wenigstens einem Netz, auf mindestens einer Taste von einer Tastatur (13) des angegebenen Terminals (11), in Abhängigkeit von mindestens einer Leistung, visualisiert am angegebenen Bildschirm (12);
- Schritt für Sendung vom angegebenen Navigationsmodul (56) zu dem angegebenen Präsentationsmodul (55), von wenigstens irgendwelchen Daten in Abhängigkeit von der angegebenen Leistung, gewählt vom angegebenen Einzelabonnent von wenigstens einem Netz;
- Schritt für Erhalt vom angegebenen Präsentationsmodul (55) von wenigstens irgendwelchen Daten in strukturierter Sprache, gesendet vom angegebenen Navigationsmodul(56);
- Schritt für Sendung zum angegebenen Decoder-Interpreter-Modul (54), von mindestens irgendwelchen Daten in wenigstens einer strukturierten Sprache vom angegebenen Präsentationsmodul (55);
- Schritt für Erhalt vom angegebenen Decoder-Interpreter-Modul (54), vom angegebenen Präsentationsmodul (55), von mindestens einer ersten Mitteilung in wenigstens einer strukturierten Sprache;
- Schritt für Sendung zum angegebenen Transportmodul (53), vom angegebenen Decoder-Interpreter-Modul (54), von mindestens einer ersten USSD-Mitteilung, die wenigstens irgendwelche Daten und/oder wenigstens eine Anweisung enthält;
- Schritt für Erhalt vom angegebenen Transportmodul (53) vom Decoder-Interpreter-Modul (54) der angegebenen mindestens einen ersten USSD-Mitteilung, die wenigstens irgendwelche Daten und/oder wenigstens eine Anweisung enthält;
- Schritt für Sendung an mindestens ein Telekommunikationsnetz (51) vom angegebenen Transportmodul (53) der angegebenen wenigstens einen ersten USSD-Mitteilung;
- Schritt für Erhalt und Interpretierung vom angegebenen Transportmodul (53) von mindestens einer zweiten USSD-Mitteilung, die wenigstens irgendwelche Daten und/oder wenigstens eine Anweisung vom angegebenen Telekommunikationsnetz (51) enthält;
- Schritt für Sendung vom angegebenen Transportmodul (53) der angegebenen mindestens einen zweiten USSD-Mitteilung, die wenigstens irgendwelche Daten und/oder wenigstens eine Anweisung enthält, zum Decoder-Interpreter-Modul (54);
- Schritt für Erhalt und Decodierung der angegebenen mindestens einen zweiten USSD-Mitteilung vom angegebenen Transportmodul (53) und/oder Interpretierung der angegebenen zweiten USSD-Mitteilung in mindestens einer strukturierten Sprache vom angegebenen Decoder-Interpreter-Modul (54);
- Schritt für Sendung vom angegebenen Decoder-Interpreter-Modul (54) zum angegebenen Präsentationsmodul (55) von mindestens einer zweiten USSD-Mitteilung in wenigstens einer strukturierten Sprache;
- Schritt für Erhalt und Formatierung für Visualisierung vom angegebenen Präsentationsmodul (55), von mindestens irgendwelcher Daten in wenigstens einer strukturierten Sprache vom angegebenen Decoder-Interpreter-Modul (54);
- Schritt für Sendung vom angegebenen Präsentationsmodul (55) zum angegebenen Navigationsmodul (56) von mindestens irgendwelchen Daten, formatiert in einer strukturierten Sprache;
- Schritt für Visualisierung vom angegebenen Navigationsmodul in Text- und/oder Grafikform an einem Bildschirm (12) des angegebenen einen mobilen Terminals (11) und Vorstellung am angegebenen einen mobilen Terminal (11), von mindestens irgendwelchen Daten und/oder mindestens einer Anweisung vom angegebenen Telekommunikationsnetz (51).

8. Methode entsprechend Anspruch 7, die **dadurch gekennzeichnet ist, dass** sie einen Schritt für Wartung und Steuerung enthält, bei Erhalt von einem mobilen Terminal (11) von einer USSD-Mitteilung, von mindestens einer Funktionalität "Klingeln" vom angegebenen USSD-Kunden (52).

9. Methode entsprechend einem der Ansprüche 7 oder 8, die **dadurch gekennzeichnet ist, dass** sie einen Schritt für Wartung und Steuerung vom USSD-Kunden (52), von mindestens einer Funktionalität für personifizierte Werbungen während mindestens einer USSD-Sitzung enthält, wobei die angegebenen personifizierten Werbungen dynamisch oder statisch sind.

10. Methode entsprechend jedem der Ansprüche 7 bis 9, die **dadurch gekennzeichnet ist, dass** sie Schritt für Beschluss zur Sendung vom angegebenen USSD-Kunden (52) während einer USSD-Sitzung der Eigenschaften des angegebenen einen mobilen Terminals (11) und/oder des Telekommunikationsnetzes (51), an dem der angegebene Terminal (11) angeschlossen ist, zu verschiedenen Netzleistungen enthält.

11. Methode entsprechend jedem der Ansprüche 7 bis 10, die **dadurch gekennzeichnet ist, dass** sie einen Schritt für Wartung und Steuerung vom USSD-Kunden (52), von mindestens einer Funktionalität enthält, verbunden mit mindestens einer Anwendung, realisiert im angegebenen Terminal (11) von den Terminalherstellern, und/oder verbunden mit wenigstens einer Anwendung von mindestens einem Telekommunikationsbetreiber, oder von mindestens einem Leistungslieferanten oder von mindestens einem Dritten, wobei die angegebene Anwendung vorher am angegebenen einen mobilen Terminal (11) heruntergeladen oder an einem entfernten Server, zu dem der Terminal (11) Zugang hat, hinterlegt ist.

12. Methode entsprechend jedem der Ansprüche 7 bis 11, die **dadurch gekennzeichnet ist, dass** sie Schritt für Externalisierung von mindestens einer Sitzung, gesteuert durch den USSD-Kunden (52) oder Teil einer Sitzung, gesteuert durch den USSD-Kunden (52) enthält, wobei der angegebene Schritt für Externalisierung als Reservekopie oder Archiv oder Transfer zu jeder für den angegebenen USSD-Kunden (52) externen Anwendung gilt.

13. Methode entsprechend jedem der Ansprüche 7 bis 12, die **dadurch gekennzeichnet ist, dass** sie Schritt für visuelle Steuerung durch den USSD-Kunden (52) von mindestens einer Sitzung, die die visuelle Steuerung der Dauer der angegebenen Sitzung, sowie die visuelle Steuerung der Dauer der Interaktivität des Anwenders während der angegebenen Sitzung und Prüfung der Kontinuität der angegebenen Sitzung einschließt, enthält.

14. Methode entsprechend jedem der Ansprüche 7 bis 13, die **dadurch gekennzeichnet ist, dass** sie Schritt für Verbesserung durch Einsatz von Grafikelementen für die Präsentation der Menüverzeichnisse, visualisiert nach Aufruf durch den Anwender, enthält.

15. Methode entsprechend jedem der Ansprüche 7 bis 14, die **dadurch gekennzeichnet ist, dass** sie Schritt für Verschlüsselung, ausgeführt vom Modul (535) für Verschlüsselung des USSD-Kunden (52), mit oder ohne visuelle Indikation, von mindestens irgendwelchen Daten und /oder mindestens einer Leistung, enthält.

## Claims

1. A telecommunications system for the use of digital applications and services, embedded in a telecommunication terminal, wherein it is a digital client (52) based on the USSD protocol, said USSD client (52), being located in at least one mobile terminal (11) and comprising:
- At least one module transport layer (53) comprising means to:
∘ receive and interpret at least one second USSD message, containing at least one data and/or at least one instruction, from at least one telecommunications network (51) ;
∘ send said at least one second USSD message containing at least one data and/or at least one instruction to a decoder interpreter module (54);
∘ receive at least one first USSD message from the decoder interpreter module (54), containing at least one data and/or at least one instruction;
∘ send back to said network (51) said at least one first USSD message;
- said at least one decoder interpreter module (54) comprising means to:
∘ receive and decode said at least one second USSD message from said transport layer module (53), and interpret said second USSD message to at least one structured language;
∘ send to a presentation module (55) said at least one second message in at least one structured language;
∘ receive from a presentation module (55) at least one first message in at least on structured language;
∘ send to said transport layer module (53), said at least one first USSD message comprising at least one data and/or at least one instruction;
- said at least one presentation module (55) comprising means to:
∘ receive and format for a display, at least one data in at least one structured language, from said decoder interpreter module (54);
∘ sent to a navigation module (56) at least one data formatted in a structured language;
∘ receive from the navigation module (56) at least one data in a structured language;
∘ send to said decoder interpreter module (54) at least one data in at least one structured language;
- said at least one navigation module (56) comprising means to:
∘ receive from said presentation module (55) at least one data formatted in a structured language;
∘ present as at least one predefined and customizable list of Bookmarks, at least one USSD service;
∘ display by using an interactive user interface, said list of Bookmarks as a textual and/or graphical form on a screen (12) of said mobile terminal (11);
∘ interpret at least one choice done by using of at least one simple pressing by an individual subscriber to at least on network, on at least one key of a keyboard (13) of said terminal (11), in function of said at least one service displayed on said screen (12);
∘ send to said presentation module (55) at least one data in function of said service chosen by said individual subscriber to at least on network;
∘ display in textual and/or graphical form on the screen (12) of said mobile terminal (11) and present on said mobile terminal (11) at least one data and/or at least one instruction from said network (51).

2. A system according to claim 1, **characterized in that** said transport layer module (53) comprises at least one module (535) for encryption of data and/or services.

3. A system according to claim 1 or 2, **characterized in that** it comprises means to communicate with at least one USSD server (59) located in a telecommunication network (51), such as any USSD server, on-device-portal server, a third party server, a third party being a provider of applications and/or services and/or contents and/or any equipment.

4. A system according to any one of claims 1 to 3, **characterized in that** said navigation module (56) is a third party and/or terminal specific application, a third party being a provider of applications and/or services and/or contents and/or any equipment.

5. A system according to any one of claims 1 to 4, **characterized in that** said presentation module (55) is a transformation module to any presentation language and comprises means for modifying the processed contents by at least one filtering, suppression, and/or contents addition and other.

6. A system according to at least one of the previous claims, **characterized in that** said decoder interpreter module (54) of said USSD client (52) is based on at least one interpreter of structured languages such as HTML or XML or VXML or CCXML or other.

7. A processing method implemented in a USSD client system (52) embedded in a mobile terminal (11), said USSD client system comprising at least one transport layer module (53), which comprises at least one module (535) for encryption of data and/or services, at least one decoder interpreter module (54), at least one presentation module (55), at least one navigation module (56), the method comprising the steps of:
- a step of reception by the navigation module (56) of at least one data formatted in a structured language, sent from the presentation module (55);
- a step of presentation by the navigation module of at least one USSD service such as at least one predefined and customizable list of Bookmarks;
- a step of displaying by the navigation module by using an interactive user interface, of said Bookmarks list as textual and/or graphical form on a screen (12) of said mobile terminal (11);
- a step of interpretation by the navigation module of at least one choice done by using at least one simple pressing by an individual subscriber to at least on network, on at least one key of a keyboard (13) of said terminal (11), in function of at least one service displayed on said screen (12);
- a step of sending from said navigation module (56) to said presentation module (55), of at least one data in function of said of service chosen by said individual subscriber to at least on network;
- a step of reception by said presentation module (55) of at least one data in a structured language sent from said navigation module (56);
- a step of sending to said decoder interpreter module (54), of at least one data in at least one structured language from said presentation module (55);
- a step of reception by said decoder interpreter module (54), from said presentation module (55), of at least one first message in at least one structured language;
- a step of sending to said transport layer module (53), from said decoder interpreter module (54), of at least one first USSD message comprising at least one data and/or at least one instruction;
- a step of reception by said transport layer module (53), from the decoder interpreter module (54), of said first USSD message containing at least one data and/or at least one instruction;
- a step of sending to at least one telecommunication network (51) from said transport layer module (53), of said at least one first USSD message;
- a step of reception and interpretation by said transport layer module (53), of at least one second USSD message, containing at least one data and/or at least one instruction, from said telecommunication network (51);
- a step of sending by said transport layer module (53), of said at least one second USSD message, containing at least one data and/or at least one instruction, to a decoder interpreter module (54);
- a step of reception and decoding of said at least one second USSD message from said transport layer module (53) et/or interpretation of said second USSD message in at least one structured language by said decoder interpreter module (54);
- a step of sending by said decoder interpreter module (54) to said presentation module (55), of at least one second USSD message in at least one structured language;
- a step of reception and formatting for displaying by said presentation module (55), of at least one data of at least one structured language, from said decoder interpreter module (54);
- a step of sending by said presentation module (55) to said navigation module (56) of at least one data formatted in a structured language;
- a step of displaying by said navigation module, in textual and/or graphical form on a screen (12) of said mobile terminal (11) and presentation on said mobile terminal (11), of at least one data and/or at least one instruction from said telecommunication network (51).

8. A method according to claims 7, **characterized in that** it comprises a step of support and management, when a reception by the mobile terminal (11) of an USSD message, of at least one feature "ringing" by said USSD client (52).

9. A method according to one of claims 7 or 8, **characterized in that** it comprises a step of support and management by the USSD client (52), of at least one feature of customized advertisements during at least one USSD session, said customized advertisements being dynamic or static.

10. A method according to any one of claims 7 to 9, **characterized in that** it comprises a step of decision for a sending, by said USSD client (52) during an USSD session, of the properties of said mobile terminal (11) and/or of the telecommunication network (51) to which said terminal (11) is attached, to different network services.

11. A method according to any one of claims 7 to 10, **characterized in that** it comprises a step of support and management by the USSD client (52) of at least one additional feature, related to at least one application implemented on said terminal (11) from terminal manufacturers, and/or related to at least one application from at least one telecommunications operator, or from at least one services provider or from at least one any third party, said application being beforehand downloaded on said mobile terminal (11) or being located in any remote server to which said terminal (11) has access.

12. A method according to any one of claims 7 to 11, **characterized in that** it comprises a step of externalization of at least one session managed by the USSD client (52) or portion of a session managed by the USSD client (52), said step of externalization being a backup or an archive or a transfer to any external to said USSD client (52) application.

13. A method according to any one of claims 7 to 12, **characterized in that** it comprises a step of visual management by the USSD client (52) of at least one session, comprising the visual management of the duration of said session, as well as the visual management of the duration of the user's interactivity during said session and a verification of the continuity of said session.

14. A method according to any one of claims 7 to 13, **characterized in that** it comprises a step of improving by using graphical elements for the presentation of the menus lists, displayed following a request of the user.

15. A method according to any one of claims 7 to 14, **characterized in that** it comprises a step of encryption, performed by the module (535) for encryption of the USSD client (52), with or without visual indication, of at least one data and/or at least one service.
